(19) Europäisches Patentamt

European Patent Office

Office européen des brevets

(11) Publication number : **0 474 378 B1**

(12) **EUROPEAN PATENT SPECIFICATION**

(45) Date of publication of patent specification :
**02.11.95 Bulletin 95/44**

(21) Application number : **91307455.5**

(22) Date of filing : **13.08.91**

(51) Int. Cl.⁶ : **H04L 12/26, H04L 12/413**

(54) **Method and apparatus for monitoring collisions in a network.**

(30) Priority : **04.09.90 US 578978**

(43) Date of publication of application :
**11.03.92 Bulletin 92/11**

(45) Publication of the grant of the patent :
**02.11.95 Bulletin 95/44**

(84) Designated Contracting States :
**DE FR GB**

(56) References cited :
**EP-A- 0 381 878**
**US-A- 4 799 211**

(73) Proprietor : **Hewlett-Packard Company**
**3000 Hanover Street**
**Palo Alto, California 94304 (US)**

(72) Inventor : **Whiteside, Charles H.**
**1485 Timber Valley**
**Colorado Springs, Colorado 80919 (US)**

(74) Representative : **Colgan, Stephen James et al**
**CARPMAELS & RANSFORD**
**43 Bloomsbury Square**
**London WC1A 2RA (GB)**

EP 0 474 378 B1

## Description

### FIELD OF THE INVENTION

This invention relates to computer systems and more particularly to computer networks. Even more particularly, the invention relates to a method and apparatus for monitoring the nodes on a computer network.

### BACKGROUND OF THE INVENTION

Computer Networks, called Local Area Networks (LANs), are increasingly popular in any environment where more than one computer is being used. Within the IEEE 802.3 protocol (Ethernet), each segment of the LAN can be up to 185 or 500 meters long, depending upon the type of connecting cable that is used. The length of the cable is the limiting factor, not the number of nodes attached to the cable. Up to 30 or 100 nodes may be attached to a segment. Because of this length, a single segment often includes an entire office, and sometimes an entire building with the cable running through cable raceways, between walls and between floors.

The IEEE 802.3 protocol is a carrier sense multiple access / collision detect (CSMA/CD) type of protocol which allows all nodes to timeshare the same cable. When a first node wants to send information to another node, the first node listens for a carrier (meaning that some other node is sending) and if no carrier is sensed, the first node begins to transmit. If two nodes begin transmission at the same time, a collision will occur and both nodes will detect the collision and stop sending. Each node will try again later. Thus all nodes use the same cable without interfering with each other.

If a node is defective it may start sending without first listening for a carrier, which will frequently cause a collision. Other problems may also cause a node to cause frequent collisions.

A collision can occur anywhere during a transmission, and very likely will occur at the very beginning of a transmission. Since the source and destination addresses are the first things transmitted after the preamble of a message, a collision will often destroy these addresses, so it is difficult to tell which node was transmitting when the collision occurred. Furthermore, the address of the node causing the collision is usually garbled since it is transmitted during the other nodes transmission. As a consequence, it is often very difficult to determine which node is causing a collision. If a node is defective and often causes collisions, a network may cease to function until the defective node is located. Because of these conditions, locating a node that is frequently causing collisions is one of the most serious problems in administering a local area network.

There is need in the art then for a method and apparatus to identify the nodes that transmit on a network. There is further need to identify nodes that cause a collision. The present invention meets these needs.

US-A-4 799 211 discloses a remote segment monitor unit that is coupled to a segment cable of a local area network system. The remote segment monitor unit, for each transaction on the cable segment, determines a value related to the transaction signal strength and determines the identity of the network node from which the transaction originated. By providing a record of the transaction signal strength associated with each network node as a function of time, components that are functioning outside of acceptable boundaries, components showing erratic behaviour and components with deteriorating performance can be identified.

### SUMMARY OF THE INVENTION

It is an aspect of the present invention to monitor signals on a segment of an IEEE 802.3 computer local area network.

Another aspect of the invention is to measure the signal strength of the signal transmitted by each node connected to the network segment.

A further aspect of the invention is to determine the identity of a node that was transmitting when a collision occurred. A still further aspect is to determine the identity of a node causing a collision.

The invention is defined by Claims 1 and 8.

In a preferred embodiment of the invention, the system has a LAN level monitor at each end of the LAN cable, with one of the monitors typically being located in a computer node attached to the cable. When an information frame is sent on the cable, each of the monitors records the relative signal strength of the frame and the source address contained within the frame. The ratio of the signal strengths is then calculated and this ratio is used to determine the location of the node that sent the frame on the network.

Each LAN level monitor has a filter that filters the incoming signal, sends the filtered signal to a sample and hold circuit, which in turn sends the signal to an analog-to-digital converter. In parallel with these elements, a phase locked loop extracts the data and clock from the signal, and a source address stripper circuit removes the source address from the information frame. Once the source address has been removed, and the signal strength level converted to a digital value, the source address and signal level are stored in a first-in-first-out (FIFO) buffer.

A LAN collision monitor is also attached to the local area network. This monitor has two filters that filter the incoming signal, one with a bandpass at five megahertz, and a second filter that has a bandpass at ten megahertz. The two filters send the filtered signal to a pair of level detectors and then to a pair of sample and hold circuits. The output of the sample and hold circuits is converted to a digital value and stored in a FIFO.

When a node starts transmitting, the preamble to the node contains a five megahertz fundamental signal, so the five megahertz filter in the LAN collision monitor extracts this signal and measures its level. When a collision occurs, the first node to start transmitting will detect the collision and stop its transmission, at which point the second node that caused the collision will be transmitting a jam signal having a ten megahertz fundamental frequency. The second filter, centered at ten megahertz, detects this signal and converts it to a digital value. Therefore, the FIFO of the LAN collision monitor contains the signal level of the original transmitting node, and the signal level of the collision-causing node.

The digital data representing the two signal levels is collected in the processor and compared to the signal levels collected by the LAN level monitor system. By comparing the signal levels with the levels collected by the LAN level monitor, the addresses of the transmitting node and colliding node can both be determined and displayed to a user of the system.

## BRIEF DESCRIPTION OF THE DRAWINGS

The above and other objects, features, and advantages of the invention will be better understood by reading the following more particular description of the invention, presented in conjunction with the following drawings, wherein:

| | |
|---|---|
| Fig. 1 | shows a diagram of a prior art transmission over a local area network with a collision occurring during the transmission; |
| Fig. 2 | shows a block diagram of a computer system incorporating the present invention; |
| Fig. 3 | shows a diagram of a computer network incorporating the invention; |
| Fig. 4 | shows a diagram of a prior art information frame for an IEEE 802.3 computer network; |
| Fig. 5 | shows a block diagram of the circuit of the LAN level monitor; |
| Fig. 6 | shows a block diagram of the source address stripper circuit of Fig. 5; |
| Fig. 7 | shows a state diagram of the controller circuit of Fig. 5; |
| Fig. 8 | shows a flowchart of the top level of the software of the LAN level monitor; |
| Fig. 9 | shows a flowchart of the store table function of the software of the LAN level monitor; |
| Fig. 10 | shows a block diagram of the LAN collision monitor circuit of the present invention; |
| Fig. 11 | shows a state diagram of the controller circuit of Fig. 10; and |
| Fig. 12 | shows a flowchart of the correlation software that correlates the signal levels of the collision nodes to the levels detected by the LAN level monitor. |

## DESCRIPTION OF THE PREFERRED EMBODIMENT

The following description is of the best presently contemplated mode of carrying out the present invention. This description is not to be taken in a limiting sense but is made merely for the purpose of describing the general principles of the invention. The scope of the invention should be determined by referencing the appended claims.

In general, the invention comprises a system that monitors the signal strength of each transmission on a local area network (LAN) cable. This system has a LAN level monitor at each end of the LAN cable, with one of the monitors typically being located in a computer node attached to the cable. When an information frame is sent on the cable, each of the monitors records the relative signal strength of the frame and the source address contained within the frame. The ratio of the signal strengths is then calculated and this ratio is used to determine the location of the node that sent the frame on the network. The LAN level monitors record, in a table, the levels and node address for all frames transmitted on the LAN.

A LAN collision monitor is also attached to the local area network. This monitor has two filters that filter the incoming signal, one with a bandpass at five megahertz, to determine the level of a preamble portion of each signal, and a second filter with a bandpass at ten megahertz, to determine the level of a jam portion of each signal. The two filters send the filtered signal to a pair of level detectors and then to a pair of sample and hold circuits. The output of the sample and hold circuits is converted to a digital value and stored in a FIFO.

When a node starts transmitting, the preamble to the node contains a five megahertz fundamental signal, so the five megahertz filter in the LAN collision monitor extracts this signal and measures its level. When a collision occurs, the first node to start transmitting will detect the collision and stop its transmission, at which point the node that caused the collision will be transmitting a jam signal having a ten megahertz fundamental frequency. The second filter, centered at ten megahertz, detects this signal and converts it to a digital value. Therefore, the FIFO of the LAN collision monitor contains the signal level of the original transmitting node, and the signal level of the collision-causing node.

The digital data representing the two signal levels is collected in the processor and compared to the signal levels collected by the LAN level monitor system. By comparing the signal levels with the levels collected by the LAN level monitor, the addresses and locations of the transmitting node and colliding node can both be determined and displayed to a user of the system. If the addresses of the nodes is sufficient, and the locations of the nodes is not needed, the second LAN level monitor would not be used.

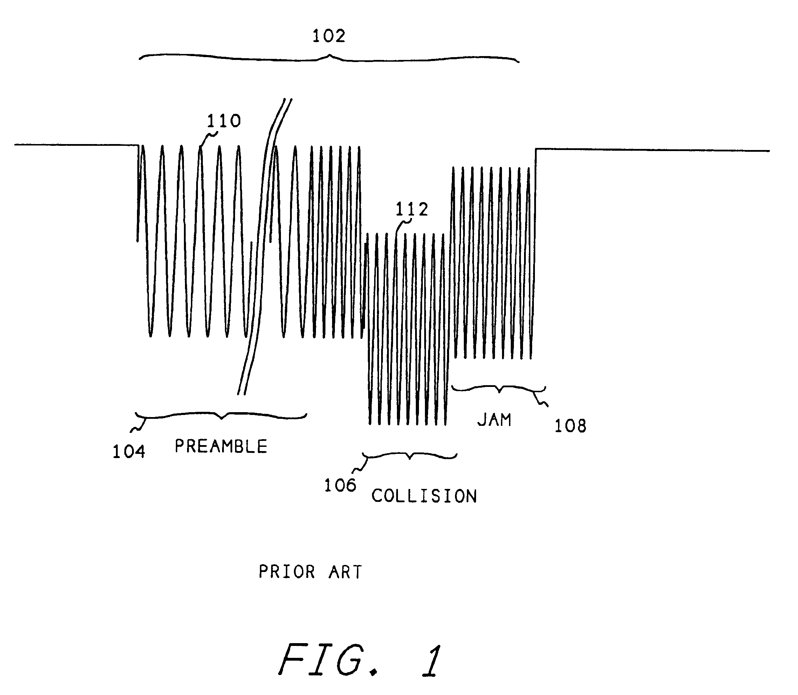

Fig. 1 shows a diagram of the signal for a prior art local area network transmission. Referring now to Fig. 1, a transmitted signal 102 has a preamble 104, here illustrated by a sine wave 110. The actual signal is more complex, however it has a fundamental frequency of five megahertz. Following the preamble 104, the transmission normally contains the source and destination addresses. In this example, however, the addresses are interrupted by a collision 106 which is illustrated by a very negative sine wave 112. After the collision 106 starts, the original node stops transmitting which then leaves the jam signal 108. The preamble 104 has a fundamental frequency of 5 mhz, and the jam signal 108 has a fundamental frequency of 10 mhz. The diagram of Fig. 1 shows these signals as pure sine waves, however, in actual practice these are complex wave forms which have frequencies beyond the 5 and 10 mhz fundamentals.

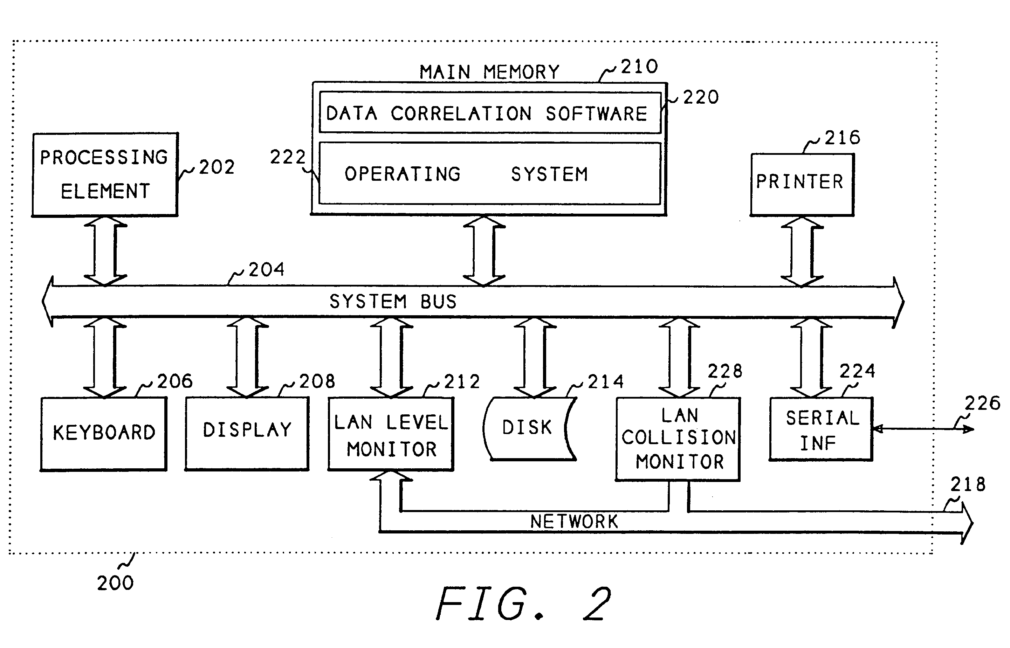

Fig. 2 shows a block diagram of a computer system incorporating the present invention. Referring now to Fig. 2, a computer system 200 contains a processing element 202. The processing element 202 communicates to other components of the computer system over a system bus 204. A keyboard 206 is used to accept textual information from a user of the system, typically the network administrator. A display 208 is used to output information to the network administrator, and may have the ability to output graphics information. A main memory 210 contains the data correlation software 220 which interfaces to the rest of the system through the operating system 222. The data correlation software 220, operating system 222, and the tables of information regarding the network are stored on a disk 214. A printer 216 is used to produce a hardcopy of the results of the data correlation software.

Network level monitor 212 collects and analyzes each information frame sent over the network 218, and thus is connected to one end of the network 218. A similar level network monitor may be connected to the other end of network 218 and it sends its data back to the computer system 200 via a serial interface 224 and a serial cable 226.

A LAN collision monitor 228 collects level data from the two nodes involved in a collision. This data allows the data correlation software 220 to identify the node addresses of the nodes involved in a collision.

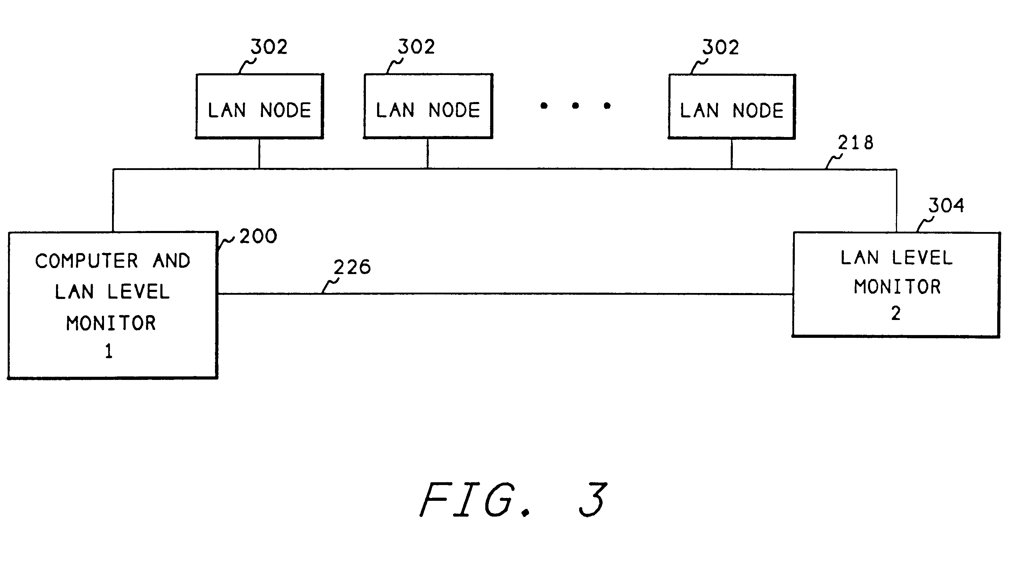

Fig. 3 shows a diagram of a computer network incorporating the present invention. Referring now to Fig. 3, the computer system 100 is shown with the LAN level monitor 212 contained inside. The local area network 218 extends from the computer 200 and connects to several LAN nodes 302. The LAN 218 terminates at its other end with a second LAN level monitor 304. The LAN level monitor 304 collects information and sends that information back to the computer system 100 over a serial interface 226.

The LAN monitor 304 could use other methods to send its information to the computer system 200. For example, the LAN monitor could use the LAN 218 to transmit the information, or it could store the information on magnetic media which would be removed and taken to the computer system 200. Also, both LAN monitors could be separated from the computer system 200 and could send their information to the computer by any of the above described methods.

It is important, however, that the two LAN monitors be located at each end of the LAN cable. If the LAN monitors exist at other locations, they will only be accurate for nodes that are located between the two LAN monitors, and will provide inaccurate locations for nodes existing outside the two LAN monitors.

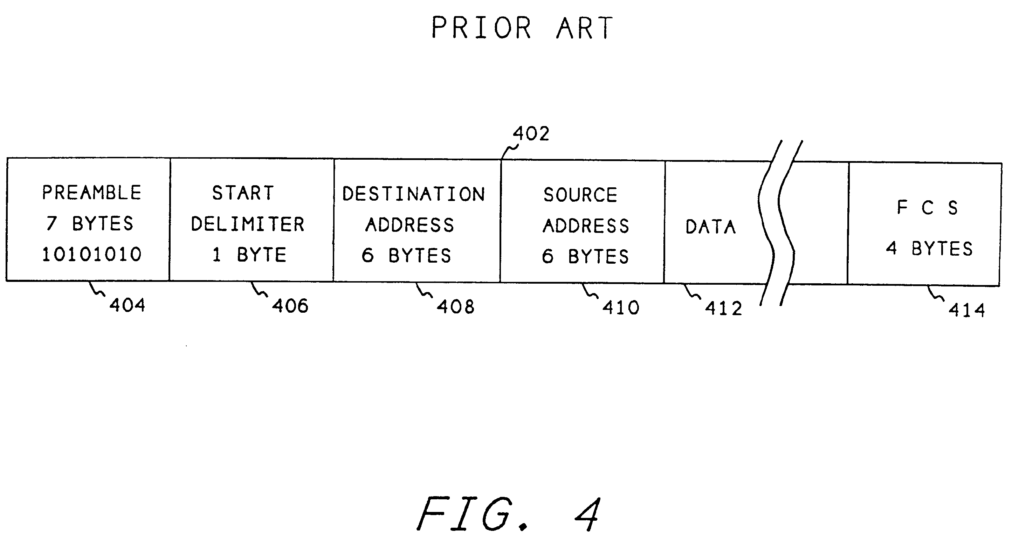

Fig. 4 shows a diagram of a prior art information frame for the IEEE 802.3 computer network. Referring now to Fig. 4, an information frame 402 starts with a preamble 404. The preamble 404 has seven bytes of the bit pattern 10101010. Following the preamble 404 is a start delimiter which is one byte containing the binary pattern 10101011. Following the start delimiter 406 is the destination address 408, which is six bytes long. Following the destination address is the source address 410 which is also six bytes long. Next follows the data portion 412 of the frame, which can vary in length from 48 bytes to 1502 bytes. The last information in the frame is the frame check sequence which is four bytes of error correction code redundancy data.

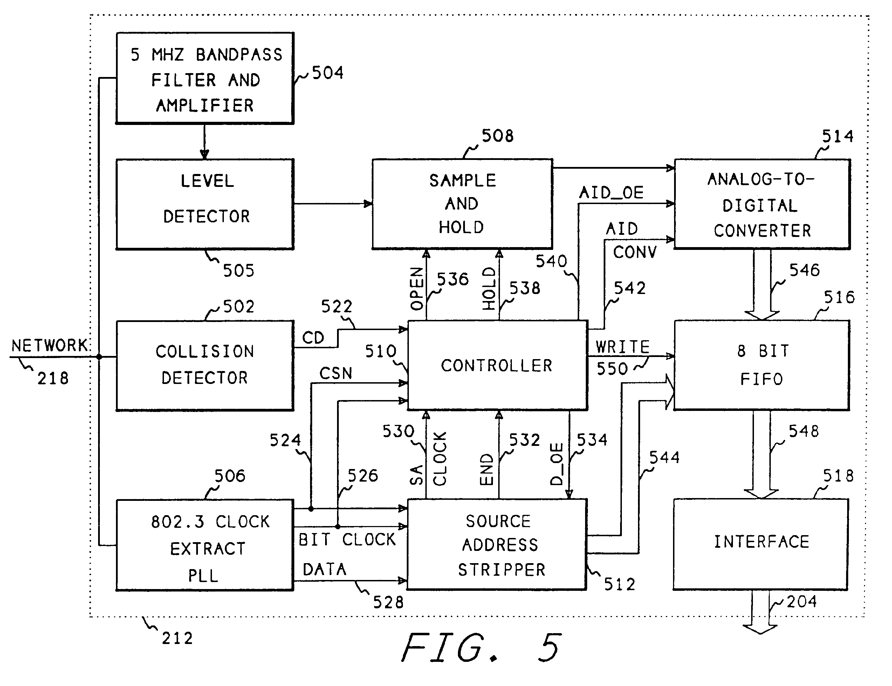

Fig. 5 shows a block diagram of the LAN monitor circuit 212 of Fig. 2. Referring now to Fig. 5, the LAN monitor circuit 212 contains a collision detector 502 which receives the network 218. The collision detector 502 monitors the network 218 and whenever a collision occurs, the collision detector 502 sends a CD signal 522 to the controller 510. The maximum transmission rate of the network 218 is ten megabits per second, however, because of the data pattern contained in the preamble 404 (Fig. 4) the preamble frequency will by five megabits per second. The five megahertz filter and amplifier circuit 504 receives the signal from the network 218, removes all harmonics and DC bias within the five megabit per second preamble, and amplifies the signal before sending it to the level detector 505 which sends a level to the sample and hold circuit 508. The sample and hold circuit 508 receives the signal from the level detector 505 and holds the signal level until the analog-to-digital converter 514 can process the analog signal.

Also connected to the network 218, is the clock extract phase locked loop circuit 506. The circuit 506 extracts the serial data 528 from the information on the network 218 and extracts a bit clock 526, which is used to synchronize the serial data 528. The clock extract PLL 506 also detects when information is being sent on the network 218 and outputs a carrier-sense signal 524 which goes to the controller 510 and the source address stripper circuit 512. The serial data 528 goes to the source address stripper circuit 512 which monitors the data 528 and extracts the source address from that data. The source address stripper 512 sends a source address clock signal 530 which is a derived signal that clocks each byte of the source address. The source address stripper 512 also sends an end signal 532 after all bytes of the source address have been clocked by the source address clock 530.

A controller circuit 510 provides all the signals necessary to control the other circuits and collect data into the FIFO 516. The controller 510 sends an open signal 536 to the sample and hold circuit 508 after carrier is detected. The open signal 536 tells the sample and hold circuit 508 to start the sample period. After 32 clock bits, the controller 510 sends a hold signal 538 to tell the sample and hold circuit 508 to hold the analog level. The controller 510 sends a D_OE signal 534 to the source address stripper 512 to cause the source address stripper 512 to gate parallel data 544 into the FIFO 516. The controller 510 sends an A/D CONV signal 542 to the analog-to-digital converter circuit 514 to tell it to convert the analog signal into a digital value. When the controller 510 is ready to store the converted level value into the FIFO, it sends the A/D_OE signal 540 to the analog-to-digital converter circuit 514. After gating the appropriate data to the FIFO 516, controller 510 sends a write signal 550 to the FIFO 516.

After data has been stored in the FIFO 516, the computer system 200 can retrieve that data over the parallel bus 548 and the interface circuit 518.

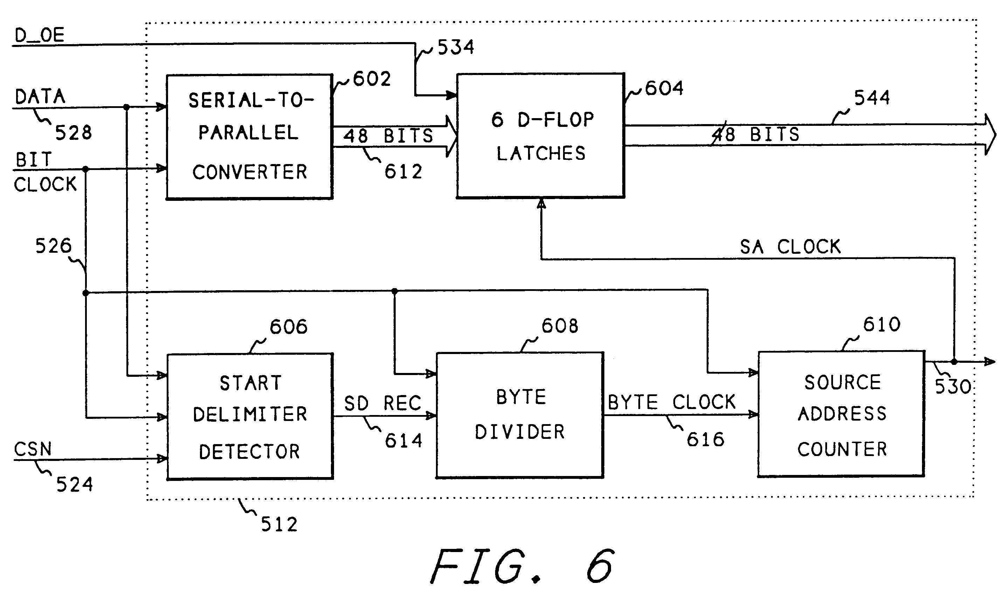

Fig. 6 shows a block diagram of the source address stripper 512 of Fig. 5. Referring now to Fig. 6, a serial to parallel converter circuit 602 receives the data 528 and bit clock 526 signals from the clock extract phase locked loop circuit 506 (Fig. 5). After converting the data to parallel, the serial to parallel converter 602 sends this data over an forty eight-bit bus 612 to six D-flop latches 604 which latch the data prior to it being sent to the eight-bit FIFO 516 (Fig. 5). The D_OE signal 534 from the controller 510 (Fig. 5) gates the data from the D-flop latch 604 onto the bus 544.

Data 528 and bit clock 526 are also connected to a start delimiter detector 606. When the start delimiter detector 606 receives the carrier sense signal 524, its starts examining the data 528 until it recognizes the start delimiter byte pattern 406 (Fig. 4). When the start delimiter pattern is detected, the start delimiter detector 606 sends the SD REC signal 614 to a byte divider circuit 608. After receiving the SD REC signal 614, the byte divider circuit 608 divides the bit clock 526 by eight to create a byte clock signal 616 which is sent to a source address counter circuit 610. The byte clock signal 616, because it is gated by SD REC 614 and carrier sense 524 synchronizes the bytes within the information frame. The source address counter circuit 610 will ignore the first six byte clock 616 signals since they clock bytes for the destination address, and will pass the next six byte clock signals 616 to become the source address clock 530. The source address clock 530 is connected to the D-flop latch 604 to latch the eight parallel bits on signal 612. The SA clock signal 530 also is sent to the controller 510 which uses the signal to activate the D_OE 534 and store the parallel bits into the FIFO 516 (Fig. 5). After the SA clock signal has activated six times, once for each of the source address bytes, the end signal 532 will be activated and sent to the controller 510. In the manner described above, the circuit of Fig. 6 will select the six source address bytes from the incoming information frame, convert them to parallel data, and send each of the six bytes over the eight-bit parallel bus 544.

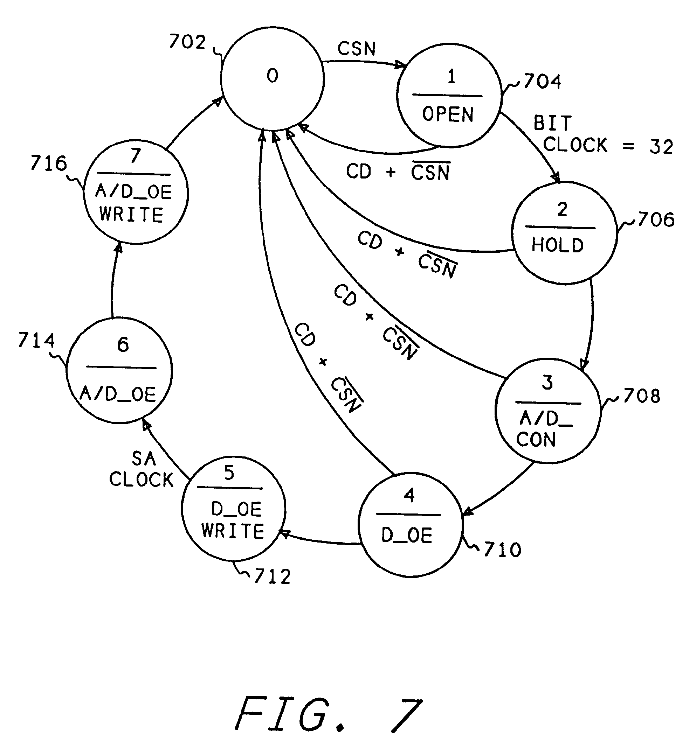

Fig. 7 shows a state diagram of the controller circuit 510 of Fig. 5. This state diagram will be described in conjunction with the block diagram Fig. 5. Referring now to Figs. 7 and 5, the controller starts in state Zero 702. When the carrier sense (CSN) signal 524 is received, the controller goes to state One 704 and sends the open signal 536 to the sample and hold circuit 508. This causes the sample and hold circuit 508 to start sampling the output of the five megahertz filter and amplifier 504. After thirty-two bit clocks, the controller goes to state Two 706, drops the open signal 536 and asserts the hold signal 538 to the sample and hold circuit 508 which causes it to hold the value accumulated for the analog level of the network signal. After sending the hold signal, the controller goes to state Three 708, drops the hold signal and asserts the A/D CONV signal 542 to cause the analog-to-digital converter circuit 514 to convert the output of sample and hold circuit 508 into a digital value.

If a collision is detected, or carrier drops, the controller goes back to state Zero, since the frame will be incomplete and no information can be accumulated from it. Otherwise, the controller goes to state Four 710 to start the process of storing the source address into the FIFO 516. State Four 710 waits for the SA clock signal and then goes to state Five 712 which asserts the D_OE signal 534 and the write signal 550 to write the source address into the FIFO 516. After all six bytes have been written into the FIFO 516, the controller goes to state Six 714. State Six 714 sends the A/D_OE signal 540 to the analog-to-digital converter 514 to cause it to gate the parallel converted output signal to the FIFO 516. The controller then goes to state Seven 716 which maintains the A/D_OE signal 540 and also asserts the write signal 550 to write the digital value into the FIFO 516. The controller then goes back state Zero 702 to wait for the next information frame.

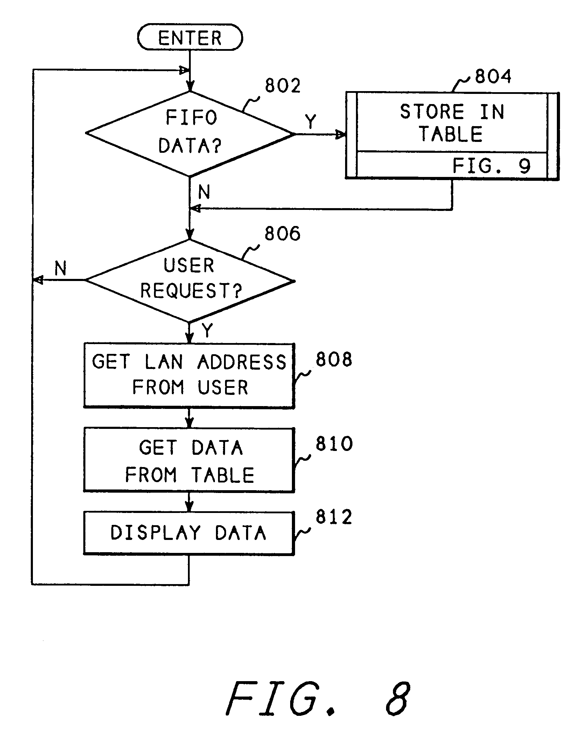

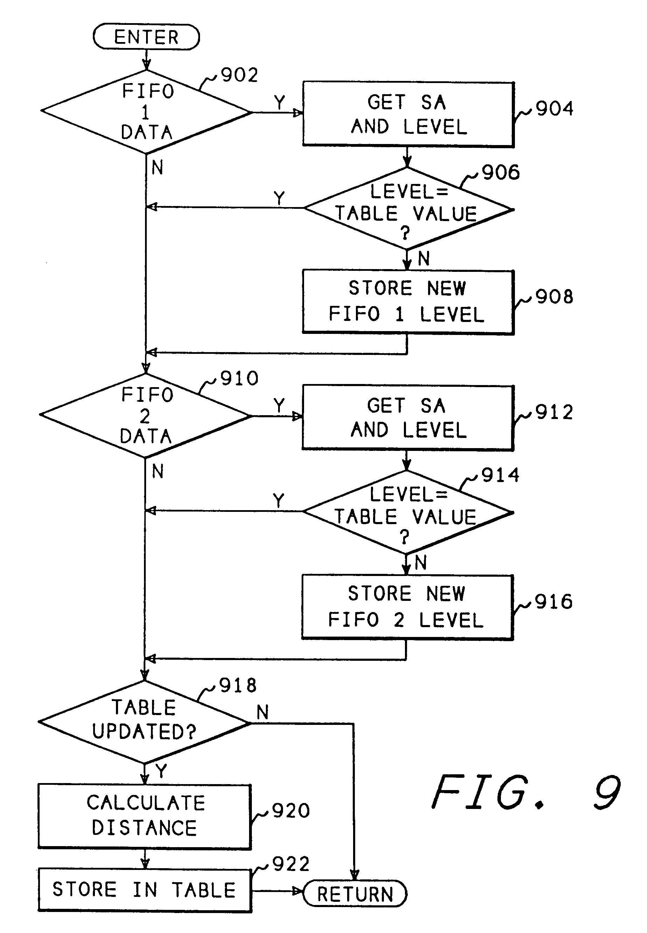

Fig. 8 shows a flowchart of the top level of the software of the invention. The purpose of the software described in Figs. 8 and 9 is to correlate the data collected in the FIFOs in the two LAN monitors of the system. The software collects the digital values for the transmission levels measured at each LAN monitor for each information frame, and using these levels it computes the location of the node that sent the information frame.

Referring now to Fig. 8, after entry, block 802 determines whether any FIFO data is available in the FIFOs of either of the LAN monitors. If data is available, block 802 transfers to block 804 which calls Fig. 9 to store the data into a table or list. After storing the FIFO data in the table, or if no FIFO data was available, control goes to block 806 which determines whether a user request has been input. If a user request has been input, block 806 transfers to block 808 which gets the LAN address from the user. Block 810 then gets the location of that node from the table and block 812 displays the location to the user before returning to block 802.

Fig. 9 is a flowchart of the store table function of the software. Referring now Fig. 9, after entry, block 902 determines whether there is data available in the first LAN monitor FIFO. If data is available in the first LAN monitor FIFO, block 902 transfers to block 904 which reads the source address and the signal level from the first FIFO, and determines whether the signal level read is equal to the value already stored in the table for that source address. If the value is the same as that already stored in the table, no new table entry is made, and block 906 transfers to block 910. The table entry contains the node address and the signal levels from both FIFOs. If the level obtained from the FIFO is different from the level stored in the table, block 906 transfers to block 908 which stores the new level in the table before transferring to block 910. Block 910 determines whether the FIFO in the second LAN monitor has data. If this FIFO has data, block 910 transfers to block 912 which gets the source address and level values from the FIFO. Block 914 then determines whether the level already stored in the table is the same as the level just read from the FIFO. If the levels are the same, block 914 transfers to block 918 since the table does not need to be updated. If the levels are different block 914 transfers to block 916 which stores the new level value from the FIFO in the second LAN monitor into the table. Block 918 then determines whether the table was updated by one of the above processes. If the table has been updated, a new location needs to calculated, so block 918 transfers to block 920. Block 920 calculates the distance from the center of the cable to the node, using the following formula:

$$\text{Distance} = \frac{10 \, (\text{LOG} \, (\text{Level 1/Level 2}))}{\text{Loss in dB per foot}}$$

If the Distance value is positive, the node is in a direction toward the first LAN level monitor from the center, and if Distance is negative, the node is in a direction toward the second LAN level monitor from the center. Thin LAN cable has a loss of 0.0098 dB per foot, and thick LAN cable has a loss of 0.0033 dB per foot. After computing the distance, block 922 stores this value into the table before returning to Fig. 8.

The following are examples of computing this distance for thin LAN cable:

Example 1:

$$\text{Level 1} = 0.7980, \text{Level 2} = 0.6368$$
$$\text{Distance} = ((10 * \text{LOG} \, (0.7980 \, / \, 0.6368))) \, / \, .0098$$
$$= 100$$

Therefore the node is located 100 feet from the center of the cable, on the side of the cable nearest LAN level monitor 1.

Example 2:

$$\text{Level 1} = .35, \text{Level 2} = .99$$
$$\text{Distance} = ((10 * \text{LOG} \, (0.35 \, / \, 0.99)) \, / \, .0098 \,)$$
$$= -461$$

Therefore, the node is 461 feet away from the center of the cable, and on the side of the cable opposite LAN level monitor 1. Also, since the Level 2 value is approximately one, which is the required transmitted voltage level, the node is located approximately coincident with LAN monitor two, therefore, the length of the cable is approximately 922 feet.

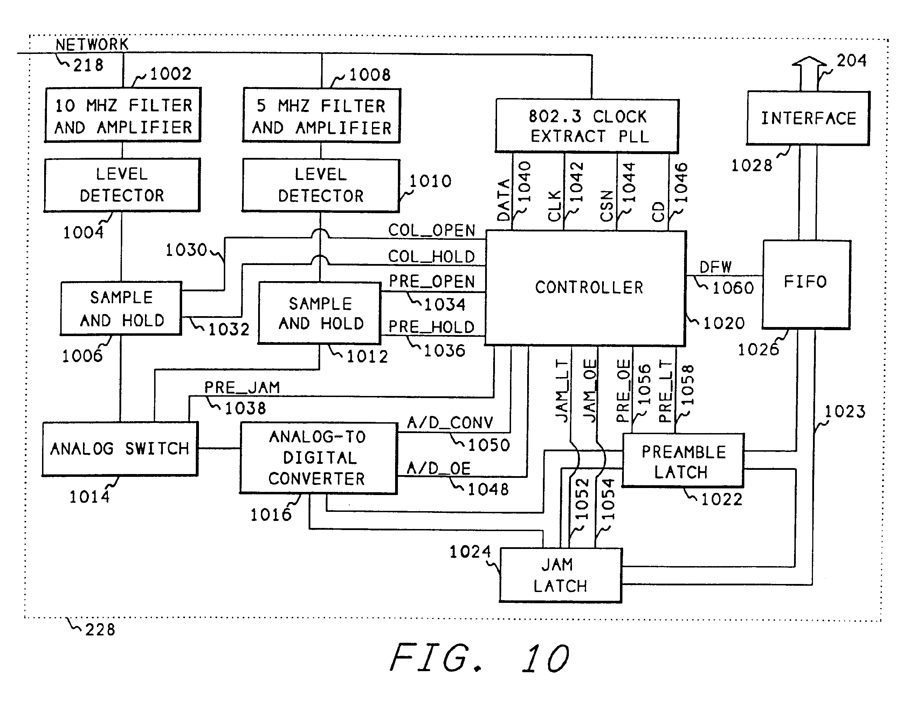

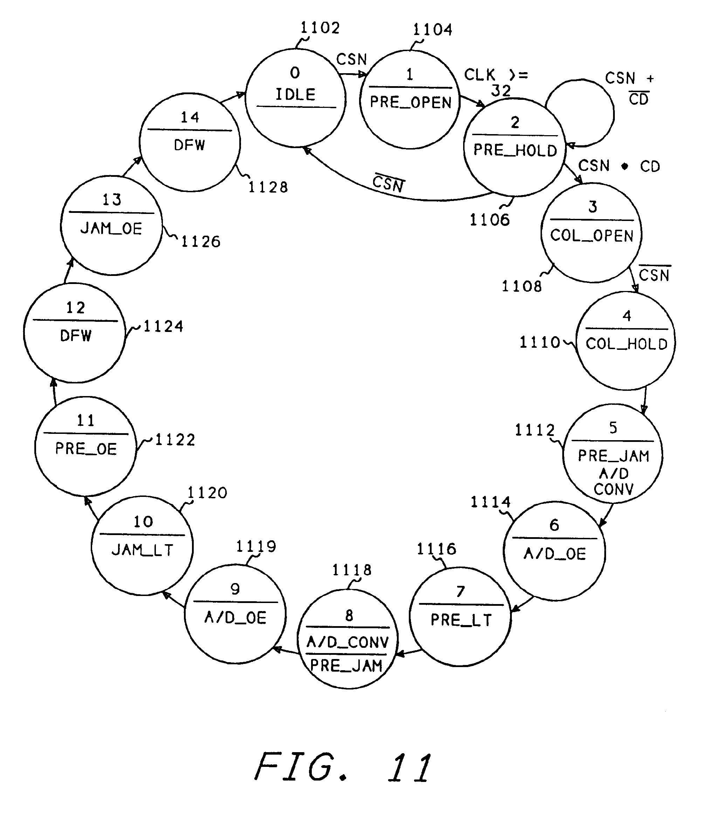

Fig. 10 shows a block diagram of the LAN collision monitor 228. Referring now to Fig. 10, the LAN collision monitor 228 has a ten megahertz bandpass filter and amplifier 1002 which receives signals from the network 218. After filtering the signal from the network, the filter 1002 sends the filtered signal to a level detector 1004. The output of the level detector 1004 is connected to a sample and hold circuit 1006. The output of the sample and hold circuit 1006 is connected to an analog switch 1014. The network signal 218 is also connected to a five megahertz bandpass filter and amplifier 1008, which has its output connected to a level detector 1010. The level detector 1010 has an output connected to a sample and hold circuit 1012, which in turn has an output connected to the analog switch 1014. A controller 1020 will select one of the two sample and hold circuit outputs through the analog switch 1014, which has its output connected to the analog-to-digital converter 1016. The output of the analog-to-digital converter 1016 is connected to a pair of latches, a preamble latch 1022 and a jam latch 1024, which are used to latch one of the two signals converted. The output of the latches are connected to a FIFO 1026 which is connected to an interface circuit 1028 connected to the system interface 204. A clock extract phase-locked loop 1018 is also connected to the network 218, and it supplies signals to the controller 1020. The operation of the diagram of Fig. 10 will be explained along with the description of Fig. 11 which shows the state diagram for the controller 1020.

Fig. 11 shows a state diagram of the controller circuit 1020 of Fig. 10. Referring now to Figs. 10 and 11, the state machine of Fig. 11 starts in idle State 0 1102 and remains there until a carrier sense signal CSN 1044 is received from the clock extract phase-locked loop 1018. When the CSN signal 1044 is received the state machine goes to State 1 1104 and sends the PRE_OPEN signal 1034 to the sample and hold circuit 1012. This causes the sample and hold circuit 1012 to start sampling the transmission preamble on the network 218. The controller then counts the CLK signal 1042 and when this signal reaches a value greater than or equal to thirty-two, the controller goes to State 2 1106. In State 2 1106 the controller sends the PRE_HOLD signal 1036 to cause the sample and hold circuit 1012 to hold the signal level of the preamble. The state machine remains in State 2 while the carrier sense (CSN) signal 1044 is present and the collision detect (CD) signal 1046 has not been received. If a collision does not occur during the transmission, the CD signal 1046 will not be received and the state machine will remain in State 2 until the CSN signal 1044 goes away, at which time the state machine goes back to State 0. If a collision does occur during the transmission, the CD signal 1046 will be received and the state machine will go to State 3 1108. In State 3 1108 the state machine sends the COL_OPEN signal 1030 to the sample and hold circuit 1006 which causes it to start sampling the level for the ten megahertz jam signal. When the CSN signal 1044 goes away, the state machine goes to State 4 1110 and sends the COL_HOLD signal 1032 to the sample and hold circuit 1006 to cause it to hold the signal level of the jam signal. The state machine then goes to State 5 1112 and sends the PRE_JAM signal 1038 to the analog switch 1014, as well as sending the A/D CONV signal 1050 to the analog-to-digital converter circuit 1016. This causes the analog switch to gate the output of the sample and hold circuit 1012, which is the signal level for the preamble signal through the analog switch 1014 to the analog-to-digital converter circuit 1016 which converts the analog level to a digital value. The state machine then goes to State 6 1114 which sends the A/D_OE signal 1048 to the analog-to-digital converter circuit 1016 which causes it to gate the digital output onto the latch input bus 1049. The state machine goes to State 7 1116 which sends the PRE_LT signal 1058 to the preamble latch circuit 1022 to cause it to latch the contents of the bus 1049. The state machine then goes to State 8 1118 which sends the A/D CONV signal 1050 to the analog-to-digital converter 1016 and sends the inverted PRE_JAM signal 1038 to the analog switch 1014. This causes the output of the sample and hold circuit 1006 to be gated through the analog switch circuit 1014 to the analog-to-digital converter circuit 1016 which then converts the analog signal to a digital value. The state machine then goes to State 9 1119 which sends the A/D_OE signal 1048 to the analog-to-digital converter circuit 1016 to cause it to gate its digital output onto the latch input bus 1049. The state machine then goes to State 10 1120 which sends the JAM_OE signal 1052 to the jam latch 1024 to cause it to latch the data on the latch input bus 1049. Then the state machine goes to State 11 1122 which sends the PRE_OE signal 1056 to the preamble latch 1022 to cause it to gate its output onto the FIFO input bus 1023. Then the state machine goes to State 12 1124 which sends the DFW signal 1060 to the FIFO 1026 to cause it to store the data on the FIFO input bus 1023. State 13 1126 then sends the JAM_OE signal 1054 to the jam latch 1024 to cause it to gate its output onto the FIFO input bus 1023. The controller then goes to State 14 1128 which sends the DFW signal 1060 to the FIFO 1026 to cause it to store the data on the FIFO input bus 1023. Since all information has been stored in the FIFO, the controller then goes back to the idle State 0 1102 to await the next transmission.

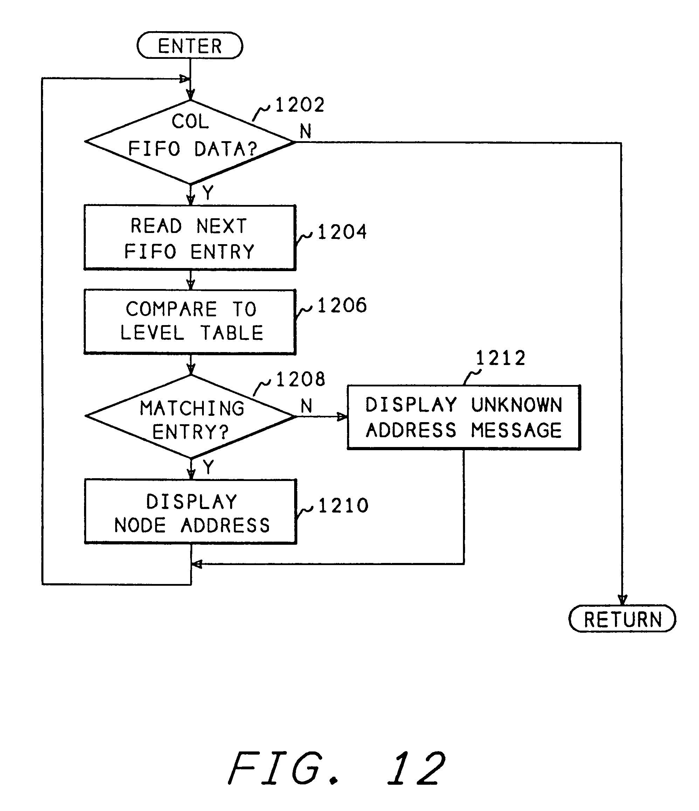

Fig. 12 shows a flowchart of the correlation software that correlates the signal levels of the collision transmission to the levels detected by the LAN level monitors in order to determine the address of the nodes causing the collision. Referring now to Fig. 12, after entry, block 1202 determines whether any collision data is in the FIFO 1026. If no collision data or no additional collision data is stored in the FIFO, block 1202 returns to the

EP 0 474 378 B1

caller. If data is stored in the FIFO, block 1202 goes to block 1204 which reads the next data from the FIFO 1026. Block 1206 then compares this data to the data in the tables collected by Fig. 9. The level detected by the collision monitor of Fig. 10 is compared to the level collected by the LAN level monitors of Figs. 5 and 6. The match is performed to within a tolerance level, since a slight variation in the signal levels would not indicate a different node. If a match occurs to within the tolerance, block 1208 transfers to block 1210 which displays the node address of the two nodes involved in the collision. If there is no match, block 1208 transfers to block 1212 which displays message indicating that the nodes are not yet known.

Because the jam signal detected by Fig. 10 is a ten megahertz signal, the level value will be slightly different from the levels collected by the LAN levels monitors. This difference is caused by the different attenuation through the cable of a ten megahertz signal versus the attenuation that occurs on the five megahertz preamble signal. Therefore, block 1206 must first adjust the level values from the FIFO 1026 for the jam signal, in order to compensate for the different loss, before performing the comparison.

Having thus described a presently preferred embodiment of the present invention, it will now be appreciated that the objects of the invention have been fully achieved, and it will be understood by those skilled in the art that many changes in construction and circuitry and widely differing embodiments and applications of the invention will suggest themselves without departing from the scope of the present invention. The disclosures and the description herein are intended to be illustrative and are not in any sense limiting of the invention, which is defined by the following claims.

## Claims

1. A system (200) for determining the addresses of nodes transmitting a signal (102) through a cable of a local area network (218) when a collision (106) occurs on said local area network (218) during said transmission, said system comprising:

   a first signal level determining means (212) connected to said cable, said means producing a plurality of first signal levels and corresponding node addresses for each signal detected in said cable;

   a collision signal level determining means (228) connected to said cable, said means producing a second signal level for a preamble portion of said signal, and said means producing a third signal level for a jam portion of said signal;

   first calculating means (202) connected to said first signal level determining means (212) and said collision signal level determining means (228) for comparing said second signal level to said plurality of first signal levels and displaying said corresponding node address when said comparison indicates a match between said second signal level and one of said plurality of first signal levels; and

   second calculating means connected to said first signal level determining means and said collision signal level determining means for comparing said third signal level to said plurality of first signal levels and displaying said corresponding node address when said comparison indicates a match between said third signal level and one of said plurality of first signal levels.

2. The system of claim 1 wherein said first signal determining means comprises:

   means for converting a signal level of said signal to a first digital value (514); and

   means (512) for extracting a node address from said signal.

3. The system of claim 2 wherein said collision signal level determining means comprises:

   means (1008, 1010, 1012, 1014, 1016, 1022) for converting a signal level of a preamble portion of said signal to a second digital value;

   means (1002, 1004, 1006, 1014, 1016, 1024) for converting a signal level of a jam portion of said signal to a third digital value; and

   means for storing (1026) said levels.

4. The system of claim 3 further comprising means (202) for comparing said second and third digital values to said plurality of first digital value and indicating a match if said digital values are equal to within a predetermined tolerance.

5. The system of claim 4 further comprising interface means (518) for sending said first digital value and said node address to said first calculating means.

6. The system of claim 2 wherein said converting means comprises:

8

EP 0 474 378 B1

filter means (504) for removing any harmonics from said signal;

sample and hold means (508) for determining an analog signal level of said signal and for maintaining said analog signal over a period of time; and

analog to digital conversion means (514) for converting said analog signal level to said digital value.

7. The system of claim 2 wherein said node address extracting means comprises:

means for detecting a start delimiter (606) value in said signal;

means (608, 610) for skipping over a destination address value; and

means (602, 604) for converting a source address value to said node address.

8. A method for determining the addresses of nodes transmitting a signal through a cable of a local area network when a collision occurs during said transmission, said process comprising:

(a) determining the signal level and a node address (212) of all signals transmitted in said cable and storing (804) said level and node address in a list of node signal levels;

(b) determining (1008, 1010, 1012, 1014, 1016, 1022) the signal level of a preamble portion of said signal when said collision occurs;

(c) determining (1002, 1004, 1006, 1014, 1016, 1024) the signal level of a jam portion of said signal when said collision occurs;

(d) comparing (1206) said preamble signal level to each of said node signal levels in said list and displaying (1210) the node address of a node wherein said preamble signal level matches said node signal level; and

(e) comparing (1206) said jam signal level to each of said node signal levels in said list and displaying (1210) the node address of a node wherein said jam signal level matches said node signal level.

9. The method of claim 8 wherein step (a) further comprises the steps of:

(a1) converting a signal level of said signal to a first digital value (514);

(a2) extracting a node address from said signal (512); and

(a3) storing said first digital value and said node address into a list (804).

10. The method of claim 9 wherein step (b) further comprises the step of converting (1008, 1010, 1012, 1014, 1016, 1022) a signal level of a preamble portion of said signal to a second digital value.

11. The method of claim 10 further comprising the step of comparing (1206) said second digital value to each of said first digital values in said list and indicating a match (1208) if said digital values are equal to within a predetermined tolerance.

12. The method of claim 9 wherein step (c) further comprises the step of converting (1002, 1004, 1006, 1014, 1016, 1024) a signal level of a jam portion of said signal to a third digital value.

13. The method of claim 10 further comprising the step of comparing (1206) said third digital value to each of said first digital values in said list and indicating a match (1208) if said digital values are equal to within a predetermined tolerance.

## Patentansprüche

1. Ein System (200) zum Bestimmen der Adressen von Knoten, die ein Signal (102) durch ein Kabel eines lokalen Netzes (218) übertragen, wenn eine Kollision (106) während der Übertragung in dem lokalen Netz (218) auftritt, das folgende Merkmale aufweist:

eine Einrichtung (212) zum Bestimmen eines ersten Signalpegels, die mit dem Kabel verbunden ist, wobei die Einrichtung eine Mehrzahl erster Signalpegel und entsprechender Knotenadressen für jedes Signal, das in dem Kabel erfaßt wird, erzeugt;

eine Einrichtung (228) zum Bestimmen eines Kollisionssignalpegels, die mit dem Kabel verbunden ist, wobei die Einrichtung einen zweiten Signalpegel für einen Präambel-Abschnitt des Signals und einen dritten Signalpegel für einen Blockierabschnitt des Signals erzeugt;

eine erste Berechnungseinrichtung (202), die mit der Einrichtung (212) zum Bestimmen eines ersten Signalpegels und der Einrichtung (228) zum Bestimmen eines Kollisionssignalpegels verbunden ist, um den zweiten Signalpegel mit der Mehrzahl der ersten Signalpegel zu vergleichen und die entsprechende Knotenadresse anzuzeigen, wenn der Vergleich eine Übereinstimmung zwischen dem zweiten Signalpegel und einem der Mehrzahl der ersten Signalpegel anzeigt; und
eine zweite Berechnungseinrichtung, die mit der Einrichtung zum Bestimmen der ersten Signalpegel und der Einrichtung zum Bestimmen des Kollisionssignalpegels verbunden ist, um den dritten Signalpegel mit der Mehrzahl von ersten Signalpegeln zu vergleichen und die entsprechende Knotenadresse anzuzeigen, wenn der Vergleich eine Übereinstimmung zwischen dem dritten Signalpegel und einem der Mehrzahl der ersten Signalpegel anzeigt.

2. Das System gemäß Anspruch 1, bei dem die Einrichtung zum Bestimmen des ersten Signals folgende Merkmale aufweist:
eine Einrichtung zum Umwandeln eines Signalpegels des Signals in einen ersten digitalen Wert (514); und
eine Einrichtung (512) zum Gewinnen einer Knotenadresse aus dem Signal.

3. Das System gemäß Anspruch 2, bei dem die Einrichtung zum Bestimmen des Kollisionssignalpegels folgende Merkmale aufweist:
eine Einrichtung (1008, 1010, 1012, 1014, 1016, 1022) zum Umwandeln eines Signalpegels eines Präambel-Abschnitts des Signals in einen zweiten digitalen Wert;
eine Einrichtung (1002, 1004, 1006, 1014, 1016, 1024) zum Umwandeln eines Signalpegels eines Blockierabschnitts des Signals in einen dritten digitalen Wert; und
eine Einrichtung zum Speichern (1026) der Pegel.

4. Das System gemäß Anspruch 3, das ferner eine Einrichtung (202) zum Vergleichen des zweiten und des dritten digitalen Werts mit der Mehrzahl der ersten digitalen Werte und zum Anzeigen einer Übereinstimmung aufweist, wenn die digitalen Werte innnerhalb einer vorbestimmten Toleranz liegen.

5. Das System gemäß Anspruch 4, das ferner eine Schnittstelleneinrichtung (518) aufweist, um den ersten digitalen Wert und die Knotenadresse zu der ersten Berechnungseinrichtung zu senden.

6. Das System gemäß Anspruch 2, bei dem die Umwandlungseinrichtung folgende Merkmale aufweist:
eine Filtereinrichtung (504) zum Entfernen aller Harmonischen aus dem Signal;
eine Abtast-Halte-Einrichtung (508) zum Bestimmen eines analogen Signalpegels des Signals und zum Beibehalten des analogen Signals über eine Zeitperiode; und
eine Analog/Digital-Wandlereinrichtung (514) zum Umwandeln des analogen Signalpegels in den digitalen Wert.

7. Das System gemäß Anspruch 2, bei dem die Knotenadressen-Gewinnungseinrichtung folgende Merkmale aufweist:
eine Einrichtung zum Erfassen eines Anfangstrennzeichen-Werts (606) in dem Signal;
eine Einrichtung (608, 610) zum Überspringen eines Bestimmungsadreßwerts; und
eine Einrichtung (602, 604) zum Umwandeln eines Quellenadreßwerts in die Knotenadresse.

8. Ein Verfahren zum Bestimmen der Adresse von Knoten, die ein Signal durch ein Kabel eines lokalen Netzes übertragen, wenn eine Kollision während der Übertragung auftritt, wobei das Verfahren folgende Schritte aufweist:
(a) Bestimmen des Signalpegels und einer Knotenadresse (212) aller Signale, die in dem Kabel übertragen werden, und Speichern (804) des Pegels und der Knotenadresse in einer Liste von Knotensignalpegeln;
(b) Bestimmen (1008, 1010, 1012, 1014, 1016, 1022) des Signalpegels eines Präambel-Abschnitts des Signals, wenn die Kollision auftritt;
(c) Bestimmen (1002, 1004, 1006, 1014, 1016, 1024) des Signalpegels eines Blockierabschnitts des Signals, wenn die Kollision auftritt;
(d) Vergleichen (1206) des Präambel-Signalpegels mit jedem der Knotensignalpegel in der Liste und Anzeigen (1210) der Knotenadresse eines Knotens, bei dem der Präambel-Signalpegel mit dem Knotensignalpegel übereinstimmt; und
(e) Vergleichen (1206) des Blockiersignalpegels mit jedem der Knotensignalpegel in der Liste und Anzeigen (1210) der Knotenadresse eines Knotens, bei dem der Blockiersignalpegel mit dem Knotensignalpegel übereinstimmt.

9. Das Verfahren gemäß Anspruch 8, bei dem Schritt (a) ferner folgende Schritte aufweist:
   (al) Umwandeln eines Signalpegels des Signals in einen ersten digitalen Wert (514);
   (a2) Gewinnen einer Knotenadresse aus dem Signal (512); und
   (a3) Speichern des ersten digitalen Werts und der Knotenadresse in eine Liste (804).

10. Das Verfahren gemäß Anspruch 9, bei dem der Schritt (b) ferner den Schritt des Umwandelns (1008, 1010, 1012, 1014, 1016, 1022) eines Signalpegels eines Präambel-Abschnitts des Signals in einen zweiten digitalen Wert aufweist.

11. Das Verfahren gemäß Anspruch 10, das ferner den Schritt des Vergleichens (1206) des zweiten digitalen Werts mit jedem der ersten digitalen Werte in der Liste und des Anzeigens einer Übereinstimmung (1208) aufweist, wenn die digitalen Werte innerhalb einer vorbestimmten Toleranz liegen.

12. Das Verfahren gemäß Anspruch 9, bei dem der Schritt (c) ferner den Schritt des Umwandelns (1002, 1004, 1006, 1014, 1016, 1024) eines Signalpegels eines Blockierabschnitts des Signals in einen dritten digitalen Wert aufweist.

13. Das Verfahren gemäß Anspruch 10, das ferner den Schritt des Vergleichens (1206) des dritten digitalen Werts mit jedem der ersten digitalen Werte in der Liste und des Anzeigens einer Übereinstimmung (1208) aufweist, wenn die digitalen Werte innerhalb einer vorbestimmten Toleranz liegen.


**Revendications**

1. Système (200) pour déterminer les adresses de noeuds transmettant un signal (102) dans un câble d'un réseau local (218), lorsqu'une collision (6) apparaît dans ledit réseau local (218) pendant ladite transmission, ledit système comprenant :
   des moyens (212) de détermination de premiers niveaux de signal, connectés audit câble, lesdits moyens produisant une pluralité de premiers niveaux du signal et des adresses de noeuds correspondants pour chaque signal détecté dans ledit câble;
   des moyens (228) de détermination de niveau de signal de collision, connectés audit câble, lesdits moyens produisant un second niveau de signal pour une partie formant préambule dudit signal, et lesdits moyens produisant un troisième niveau de signal pour une partie de bourrage dudit signal;
   des premiers moyens de calcul (202) raccordés auxdits moyens (212) de détermination de premiers niveaux de signal et lesdits moyens (224) de détermination du niveau de signal de collision pour comparer ledit second niveau de signal à ladite pluralité de premiers niveaux du signal et afficher ladite adresse de noeud correspondant lorsque ladite comparaison indique une correspondance entre ledit second niveau de signal et l'un de ladite pluralité de premiers niveaux du signal; et
   des seconds moyens de calcul connectés auxdits moyens de détermination de premiers niveaux de signal et auxdits moyens de détermination du niveau du signal de collision pour comparer lesdits troisièmes niveaux de signal à ladite pluralité de premiers niveaux de signal et afficher ladite adresse de noeud correspondante lorsque ladite comparaison indique une correspondance entre ledit troisième niveau de signal et l'un de ladite pluralité de premiers niveaux de signal.

2. Système selon la revendication 1, selon lequel lesdits moyens de détermination de premiers niveaux de signal comprennent :
   des moyens pour convertir un niveau dudit signal en une première valeur numérique (514); et
   des moyens (512) pour extraire une adresse de noeud à partir dudit signal.

3. Système selon la revendication 2, dans lequel lesdits moyens de détermination du niveau de signal de collision comprennent :
   des moyens (1008, 1010, 1012, 1014, 1016, 1022) pour convertir un niveau de signal d'une partie formant préambule dudit signal en une seconde valeur numérique;
   des moyens (1002, 1004, 1006, 1014, 1016, 1024) pour convertir un niveau de signal d'une partie de blocage dudit signal en une troisième valeur numérique; et
   des moyens pour mémoriser (1026) lesdits niveaux.

4. Système selon la revendication 3, comprenant en outre des moyens (202) pour comparer lesdites seconde et troisième valeurs numériques à ladite pluralité de premières valeurs numériques et indiquant une correspondance si lesdites valeurs numériques sont égales dans les limites d'une tolérance prédéterminée.

5. Système selon la revendication 4, comprenant en outre des moyens d'interface (518) pour envoyer ladite première valeur numérique et ladite adresse de noeud auxdits premiers moyens de calcul.

6. Système selon la revendication 2, dans lequel lesdits moyens de conversion comprennent :
   les moyens formant filtre (504) pour éliminer tous les harmoniques dudit signal;
   des moyens d'échantillonnage et de blocage (508) pour déterminer un niveau analogique dudit signal et maintenir ledit signal analogique pendant un intervalle de temps; et
   des moyens de conversion analogique/numérique (514) pour convertir ledit niveau analogique du signal en ladite valeur numérique.

7. Système selon la revendication 2, dans lequel lesdits moyens d'extraction d'adresses de noeuds comprennent :
   des moyens pour détecter une valeur de borne de démarrage (606) dans ledit signal;
   des moyens (608,610) pour sauter une valeur d'adresse de destination; et
   des moyens (602,604) pour convertir une valeur d'adresse d'origine en ladite adresse de noeud.

8. Procédé pour déterminer les adresses de noeuds transmettant un signal par l'intermédiaire d'un câble d'un réseau local lorsqu'une collision se produit pendant ladite transmission, ledit procédé consistant à :
   (a) déterminer le niveau du signal à une adresse donnée (212) de tous les signaux transmis dans ledit câble et mémoriser (804) ledit niveau et ladite adresse de noeud dans une liste de niveaux du signal de noeud;
   (b) déterminer (1008, 1010, 1012, 1014, 1016, 1022) le niveau d'une partie formant préambule dudit signal lorsque ladite collision se produit;
   (c) déterminer (1002, 1004, 1006, 1014, 1016, 1024) le niveau d'une partie de bourrage dudit signal lorsque ladite position se produit;
   (d) comparer (1206) ledit niveau du signal de préambule à chacun desdits niveaux du signal de noeud de ladite liste et afficher (1210) l'adresse d'un noeud, dans lequel ledit niveau du signal de préambule concorde avec ledit niveau du signal de noeud; et
   (e) comparer (1206) ledit niveau du signal de bourrage à chacun desdits niveaux du signal de noeud dans ladite liste et afficher (1210) l'adresse d'un noeud, pour laquelle ledit niveau du signal de préambule concorde avec ledit niveau du signal de noeud; et
   (f) comparer (1206) ledit niveau du signal de bourrage à chacun desdits niveaux du signal de noeud dans ladite liste et afficher (1210) l'adresse d'un noeud, dans lequel ledit niveau du signal de bourrage coïncide avec ledit niveau du signal de noeud.

9. Procédé selon la revendication 8, dans lequel l'étape (a) comprend en outre les étapes consistant à :
   (al) convertir le niveau dudit signal en une première valeur numérique (514);
   (a2) extraire une adresse de noeud à partir dudit signal (512); et
   (a3) mémoriser ladite première valeur numérique et ladite adresse de noeud dans une liste (804).

10. Procédé selon la revendication 9, selon lequel ladite étape (b) comprend en outre ladite étape de conversion (1008, 1010, 1012, 1014, 1016, 1022) un niveau d'une partie formant préambule dudit signal en une seconde valeur numérique.

11. Procédé selon la revendication 10, comprenant en outre l'étape consistant à comparer (1206) ladite seconde valeur numérique à chacune desdites premières valeurs numériques de ladite liste et indiquer une correspondance (1208) si lesdites valeurs numériques sont égales, dans les limites d'une tolérance prédéterminée.

12. Procédé selon la revendication 9, selon lequel l'étape (c) comprend en outre l'étape de conversion (1002, 1004, 1006, 1014, 1016, 1024) un niveau d'une partie de blocage dudit signal en une troisième valeur numérique.

13. Procédé selon la revendication 10, comprenant en outre l'étape consistant à comparer (1206) ladite troisième valeur numérique à chacune desdites premières valeurs numériques de ladite liste et indiquer une correspondance (1208) si lesdits valeurs numériques sont égales dans les limites d'une tolérance prédéterminée.

PRIOR ART

FIG. 1

FIG. 2

FIG. 3

PRIOR ART

| PREAMBLE<br>7 BYTES<br>10101010 | START<br>DELIMITER<br>1 BYTE | DESTINATION<br>ADDRESS<br>6 BYTES | SOURCE<br>ADDRESS<br>6 BYTES | DATA | F C S<br>4 BYTES |
|---|---|---|---|---|---|
| 404 | 406 | 408 | 410 | 412 | 414 |

402

*FIG. 4*

EP 0 474 378 B1

FIG. 5

FIG. 6

FIG. 7

FIG. 8

FIG. 9

FIG. 10

EP 0 474 378 B1

*FIG. 11*

```
                    ┌─────────┐
                    │  ENTER  │
                    └────┬────┘
                         │
                         ▼
              ◇─────────────────◇    ~1202
              │       COL         │  N
              │   FIFO DATA?      ├──────────────────────────┐
              ◇─────────┬─────────◇                          │
                        │ Y                                   │
                        ▼                                     │
              ┌───────────────────┐ ~1204                     │
              │    READ NEXT       │                          │
              │    FIFO ENTRY      │                          │
              └─────────┬─────────┘                          │
                        │                                     │
                        ▼                                     │
              ┌───────────────────┐ ~1206                     │
              │   COMPARE TO       │                          │
              │   LEVEL TABLE      │                          │
              └─────────┬─────────┘                          │
                        │                                     │
                        ▼           ~1208      1212           │
              ◇─────────────────◇        ┌──────────────────┐│
              │    MATCHING       │  N    │ DISPLAY UNKNOWN  ││
              │    ENTRY?         ├──────▶│ ADDRESS MESSAGE  ││
              ◇─────────┬─────────◇        └────────┬─────────┘│
                        │ Y                          │         │
                        ▼                            │         │
              ┌───────────────────┐ ~1210            │         │
              │    DISPLAY         │                  │         │
              │    NODE ADDRESS    │                  │         │
              └─────────┬─────────┘                  │         │
                        │◀──────────────────────────┘         │
                        │                                      │
                        (loop back to ENTER)                   ▼
                                                        ┌─────────┐
                                                        │ RETURN  │
                                                        └─────────┘
```

# FIG. 12